**Europäisches Patentamt**

**European Patent Office**

**Office européen des brevets**

(19)

(11) Veröffentlichungsnummer: **0 024 749**
**A1**

(12) **EUROPÄISCHE PATENTANMELDUNG**

(21) Anmeldenummer: **80200411.9**

(22) Anmeldetag: **02.05.80**

(51) Int. Cl.³: **F 16 C 11/06**

(30) Priorität: **30.08.79 DE 2935003**

(43) Veröffentlichungstag der Anmeldung:
**11.03.81 Patentblatt 81/10**

(84) Benannte Vertragsstaaten:
**AT BE CH FR GB IT LI NL SE**

(71) Anmelder: **A. Ehrenreich GmbH & Co. KG**
**Hansaallee 190**
**D-4000 Düsseldorf 11(DE)**

(72) Erfinder: **Stemmer, Horst-Heinz**
**Am Kamberg 4**
**D-4005 Meerbusch 3(DE)**

(72) Erfinder: **Extra, Wilhelm**
**Theodor-Fontane-Strasse 5**
**D-4047 Dormagen 5(DE)**

(72) Erfinder: **Schmitz, Herbert**
**Potsdamer-Strasse 36**
**D-4000 Düsseldorf(DE)**

(72) Erfinder: **Podorf, Jürgen**
**Büdericher-Strasse 5**
**D-4156 Willich 1(DE)**

(72) Erfinder: **Hafeneger, Hans**
**Fadheider-Strasse 73**
**D-4156 Willich 2(DE)**

(72) Erfinder: **Schedler, Manfred**
**Johann-Trarbacher-Strasse 5**
**D-6540 Simmern(DE)**

(72) Erfinder: **Blumberg, Willy**
**Am Eisenbrand 20**
**D-4005 Meerbusch 1(DE)**

(74) Vertreter: **Scheerer, Wolfgang**
**Bommersweg 1**
**D-4005 Meerbusch 1(DE)**

(54) **Abdichtung eines Kugelgelenkes.**

(57) Die Abdichtung eines Kugelgelenkes besteht aus einem Dichtungsbalg (6), der auf dem außen zylindrischen Sitz eines Gelenkgehäuses (1) mit Hilfe eines Halteringes (5) festgelegt ist. Der am Gelenkgehäuse (1) anliegende Ringschenkel (10, 13) besitzt durch eine Umfangsnut (9) auf seiner dem Gelenkgehäuse (1) abgekehrten Stirnfläche V-Form und ist durch Radialschlitze in Einzelkrallen (10) unterteilt, deren Füße durch Bereiche (12) geringen Querschnittes als Fotoscharniere ausgebildet sind. Der am Gelenkgehäuse (1) anliegende Schenkel (13) des V im Neuzustand des Halteringes (5) ist konisch und erst in seiner Betriebsstellung werden die Krallen (10) gegen die federnde Randwulst (7) des Dichtungsbalges (6) verspannt, der durch diese Vorspannung axial auf dem Gelenkgehäuse (1) fixiert ist.

FIG. 1

FIG. 3

- 1 -

Abdichtung eines Kugelgelenkes.

Die vorliegende Erfindung betrifft die Abdichtung eines Kugelgelenkes und besteht aus einem elastischen Dichtungsbalg aus Gummi oder Kunststoff, der auf einem außen zylindrischen Sitz des Gelenkgehäuses mit Hilfe eines U-förmigen Halteringes durch Radialverspannung allseitig festgelegt ist. Der Haltering ist in axialer Gelenkrichtung offen, besitzt einen der Randwulst des Dichtungsbalges entsprechenden Querschnitt und nimmt diesen in sich auf.

Derartige Halteringe aus Blech haben einige Nachteile. Um die zylinderförmige Berührungsfläche zwischen Ring und Gehäuse abzudichten, bedarf es enger Toleranzen und einer einwandfreien Oberfläche beider Teile. Außerdem hat der Haltering bei der Montage des Dichtungsbalges noch nicht seine endgültige Form: der zweite Schenkel wird erst nach dem Aufsetzen des Balges durch eine Presse in seine endgültige Stellung umgeformt. Dadurch ist die Gefahr einer Balgbeschädigung außerordentlich groß.

Aufgabe der Erfindung ist eine Vereinfachung der Balgbefestigung: durch einen nur grob geschmiedeten, daß heißt nicht zerspanten zylindrischen Balgsitz auf dem Kugelgelenkgehäuse, durch die Verwendung eines gegenüber einem Blechring billiger herstellbaren Halteringes aus Kunststoff und durch eine solche Gestaltung des Ringes, daß sich der Dichtungsbalg leicht in dessen Nut einführen läßt, wobei die Montage des Ringes auf das Gehäuse die Gefahren der Beschädigung des Dichtungsbalges weitgehend vermeidet.

Diese Aufgabe wird durch die im Hauptanspruch gekennzeichneten Merkmale gelöst.

Die erfindungsgemäßen Vorteile werden anhand eines Ausführungsbeispiels in der Zeichnung dargestellt.

Darin zeigt:

Fig.1   ein Kugelgelenk mit seinen Abdichtungsteilen im Schnitt,

Fig.2   den Haltering gemäß Fig.1 in der Draufsicht,

Fig.3   den Querschnitt des Halteringes gemäß Fig.1 und 2, und

Fig.4   ein Kugelgelenk mit den Abdichtungsteilen gemäß Fig.1 fertig montiert.

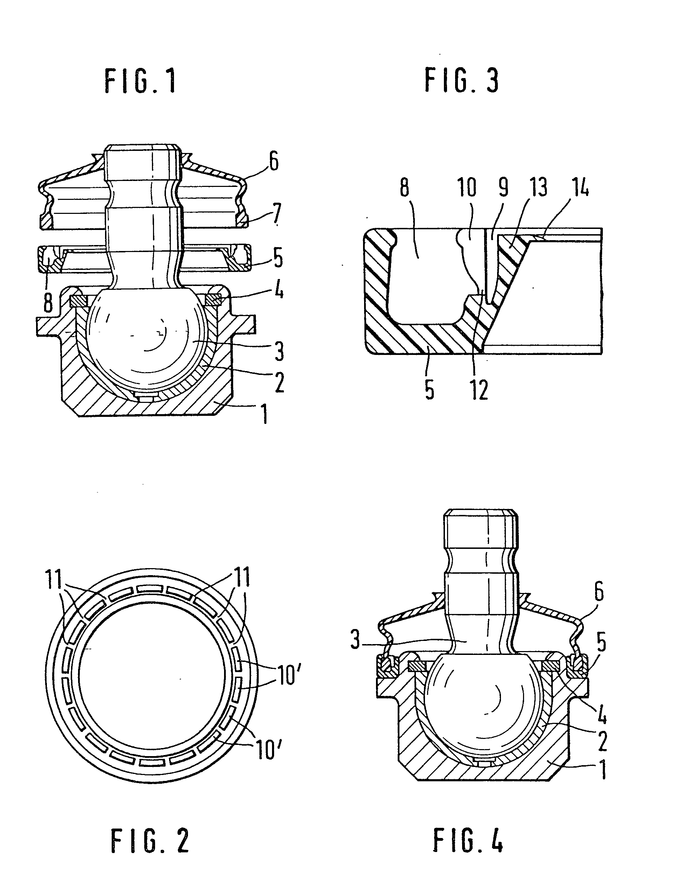

In Fig.1 ist ein Kugelgelenk dargestellt, das aus einem Gehäuse 1 mit einer Kugelschale 2 und einem Kugelzapfen 3 sowie einem Verschlußring 4 besteht. Die Abdichtung des Gelenkes besteht aus einem U-förmigen Haltering 5 für einen Dichtungsbalg 6. Dabei ruht eine Randwulst 7 des Dichtungsbalges 6 in der Querschnittsöffnung 8 des Halteringes 5. Zu diesem Zweck ist die Querschnittsöffnung 8 des Halteringes 5 entsprechend der Randwulst 7 des Dichtungsbalges 6 ausgebildet.

Wie insbesondere Fig.3 zeigt, hat der am Gehäuse 1 anliegende Ringschenkel eine tiefe Umfangsnut 9 auf seiner dem Gehäuse abgekehrten Stirnfläche und damit eine V-Form. Der an der Randwulst 7 des Dichtungsbalges 6 anliegende Schenkel 10 des V-Profiles ist durch eine Vielzahl von Radialschlitzen 11 (Fig.2) in viele Einzelkrallen 10 unterteilt, deren Füße durch Bereiche 12 geringer Querschnitte als Fotoscharniere ausgebildet sind (Fig.3). Der am Gehäuse anliegende Schenkel 13 des V-Profiles ist im Neuzustand des Ringes innen konisch und trägt an seinem freien Ende zweckmäßig eine Dicht- und Abstützkante 14. Erst in der Betriebsstellung (Fig.4) drückt der Schenkel 13 die Krallen 10 gegen die federnde Randwulst 7 des Dichtungsbalges 6 und durch diese Verspannung wird der Haltering 5 seinerseits auch axial am Gelenkgehäuse 1 festgehalten.

0024749

Patentanspruch

Abdichtung eines Kugelgelenkes, bestehend aus einem Dichtungsbalg (6), der auf dem außen zylindrischen Sitz eines Gelenkgehäuses (1) mit Hilfe eines Halteringes (5) mit U-Profil durch Radialverspannung des Ringes (5) auf dem Gehäuse (1) festgelegt ist, wobei der U-Querschnitt wenigstens innen entsprechend der Randwulst des Dichtungsbalges(6) geformt ist und die Wulst teilweise übergreifend fixiert, dadurch gekennzeichnet, daß der Ring (5) aus Kunststoff besteht, daß der am Gehäuse (1) anliegende Ringschenkel (10, 13) durch eine tiefe Umfangsnut (9) auf seiner dem Gehäuse (1) abgekehrten Stirnfläche V-Form besitzt, daß der am Dichtungsbalg (6) anliegende Schenkel (10) des V-Profiles durch eine Vielzahl von Radialschlitzen (11) in viele Einzelkrallen (10) unterteilt ist, deren Füße durch Bereiche (12) geringen Querschnittes als Fotoscharniere ausgebildet sind, daß der am Gehäuse (1) anliegende Schenkel (13) des V im Neuzustand des Ringes (5) konisch ist, erst in seiner Betriebsstellung die Krallen (10) gegen die federnde Randwulst (7) des Dichtungsbalges (6) verspannt und durch diese Vorspannung seinerseits auch axial auf dem Gelenkgehäuse (1) fixiert ist.

FIG.1

FIG. 3

FIG. 2

FIG. 4

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 357 728 (J.O. MELTON et al.)<br>* Anspruch 8; Fig.2 *<br>-- | 1 |
| A | DE - B - 1 266 572 (A. EHRENREICH & CIE.)<br>* gesamtes Dokument*<br>-- | |
| A | FR - A - 928 812 (R.G. LE TOURNEAU, INC.)<br>* gesamtes Dokument *<br>-- | |
| A | GB - A - 1 181 900 (AUTOMATIVE PRODUCTS CO. LTD.)<br>* gesamtes Dokument *<br>-- | |
| A | US - A - 2 559 857 (A.H. EDWARDS)<br>* gesamtes Dokument *<br>-- | |
| A | US - A - 3 498 622 (J. BELART)<br>* gesamtes Dokument *<br>---- | |

**KLASSIFIKATION DER ANMELDUNG (Int.Cl.³)**

F 16 C 11/06

**RECHERCHIERTE SACHGEBIETE (Int. Cl.³)**

F 16 C 11/00
F 16 D 3/00
F 16 J 3/00
F 16 J 15/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 10-11-1980 | MASSALSKI |

EPA form 1503.1 06.78